# EUROPEAN PATENT APPLICATION

(11) **EP 1 439 479 A1**
(43) Date of publication of application: **21.07.2004**
(21) Application number: 03405012.0
(22) Date of filing: 15.01.2003
(51) Int. Cl.: G06F 17/60, G06F 9/445, H04L 29/06

(54) **Computer based system for servicing an equity-based employee benefit program**

(71) Applicant: UBS AG, 8001 Zürich (CH)
(72) Inventor: Juhre, Frank, 65812 Bad Soder (DE); Vanderhoof, Heather, 8134 Adliswil (CH); Chapman, Steve, 8703 Erlenbach (CH); Khandelwal, Lee, 8704 Herrliberg (CH); Khanna, Sudhir, 8002 Zürich (CH)
(74) Representative: Clerc, Natalia

(57) **Abstract**

A computer based servicing system (S) for servicing an equity-based employee benefit program comprises a framework services module (FS), a participant services module (PS), a corporate services module (CS) and an execution services module (ES). The modules communicate with at least one database (D, DC, DR). The system (S) has standard messaging adaptors (AD) for communication with a web system (I) and external systems (E), at least one of said external systems (E) being a trade execution system (ET). The environment of this servicing system (S) can accommodate and communicate with any other banking, trading and administrative systems. Furthermore, the servicing system (S) is based on an open architecture. This servicing system (S) is very flexible, highly customizable and can meet the requirement of international companies, especially European companies.

## Description

### Field of the invention

The invention relates to a computer based system for servicing an equity-based employee benefit program in accordance with the preamble of claim 1.

### Description of the related art

Some publicly owned companies are providing payment to their employees in the form of stock based compensation, for example equities or options to purchase shares of stock in the company at discounts from the prevailing market price. This stock based compensation is attractive as well for the companies as for the employees. Therefore, more and more companies are using such compensation or benefit plans.

Each of the vehicles for each grant has to be individually tracked for proper delineation of such parameters as the granting, vesting, deferral, restriction exercise and expiration, distribution dates and the particular strike price for which the option was granted, respectively the cost basis for a purchased option. However, since the companies started to offer such benefit plans not only to the upper level executives but also to a greater number of employees, the managing of these compensation plans became increasingly complex. Furthermore, since many of the corporate employees are not often trading with equities, the servicing of such plan participants is challenging the normal business systems and requires an extremely high degree of automation.

Therefore, several computer based systems for managing employee equity-based compensation programs were developed. US 2002/0042771 discloses a method and system for managing and optimizing stock plans like ESOPs (Employee Stock Option Plans), RSAs (Restricted Stock Award plans) and ESPPs (Employee Stock Purchase Plans) via a communication network. The system provides comprehensive services and features to the employee or participant and to the employer in an efficient manner. The system comprises a volatile data storage for storing participant information pursuant to a data transfer from a non-volatile database of a third party's administrative system, an interface system for interacting with a participant regarding a requested transaction and enabling the participant to select a response pertaining to the employee stock plan, a trading system for conducting individual participant transactions on a public exchange, a communication system that connects a participant to the system and means for updating the participant information in the volatile data storage according to the selections and transaction made by the participant. The communication uses an interactive voice response device, an internet or an intranet interface. The system allows participating employees to view their holdings, to exercise, to hold and/or sell stock via a number of different vehicles, including cash, cashless, sell to cover, sell to raise shares, sell to raise cash or stock swap. The system also includes a reporting system that enables a corporate employer to run a report based on the participant information. This system is able to accommodate an unlimited number of participants and sponsoring employers.

US 2002/0032636 discloses a finance system for automatic processing of a transaction pursuant to at least one of a stock option plan and a stock purchase plan.

Other systems for managing stock option accounts of company sponsored stock ownership plans are disclosed in US 6'173'270 and US 5'671'363.

These systems are working quite well for servicing equity-based compensation plans of US companies. However, since they originated in the US, these systems only reflect requirements to serve companies listed on the US stock exchanges.

The European market is not as homogenous as the U.S. market. The differences in compensation plans and instruments, regional- and country-specific legal, regulatory and tax issues as well as country-specific differences in operation and handling require an extremely high degree of flexibility from a system servicing employee equity-based benefit programs. Nevertheless, there are known some computer-based systems used for European companies. However, they are only focusing on one single local market and are not considering all of the above-mentioned issues.

In addition to that, many providers of such equity-based compensation systems are banks that have an own brokerage house and trading departments and are concentrated on single markets.

US 6'411'939 discloses a system servicing an employee benefit program for US multi-national employers. Especially when "qualified" and "non-qualified" benefits are offered by the company, not all of the benefits can be offered in other countries for economic and tax reasons. This system is supposed to enable a fair and equal compensation program to all employees, it means also to the ones outside the U.S. This system is therefore deemed to be able to consider different tax and law systems. However, this system is still only adapted to U.S. companies and does not fulfill the requirements of a European based international corporation.

Furthermore, a computer-based system for servicing an equity-based employee benefit program should meet the requirements of the corporation as well as the requirements of the employees, i.e. the individual participants. The individual participants require user-friendly information services while assets are restricted and financial advice regarding plan events complemented by alternative and structured investment offerings. Furthermore, the above mentioned needs can vary. The present systems however are quite fixed and cannot be adapted to changing requirements. Automatic trading is only implemented for the U.S. exchanges or the local country exchange for providers in local jurisdictions.

### Summary of the invention

It is therefore an object of the invention to provide a computer-based system for servicing an equity-based employee benefit program which is more flexible and can therefore meet the needs of multinational corporations and their employees. It shall furthermore be linkable to any banking system. The system shall especially meet the needs of corporations based in the European market, preferably in the EU5 (Germany, Spain, Italy, United Kingdom and France) and in the Swiss Market.

This object is achieved by a system with the features of claim 1.

The computer based servicing system according to the invention does not use rigid links for communication with external systems as used in the state of the art. The inventive servicing system comprises a multiple standard messaging adaptors to enable the use of standard messaging interfaces for communication with a multiple external systems, such as web systems, trading systems and information systems.

The servicing system according to the invention does especially not use rigid links to brokerage and settlement systems, but uses multiple standard messaging protocols, which are used to inter-connect brokers, settlement providers and custodians to allow for communication with any provider offering the services required to effect execution and settlement of plan related vehicles.

The servicing system according to the invention is built in an open architecture and uses customizable tables and templates. It can therefore be changed in an easy way to reflect all multi-national, especially the European, requirements driven by the corporation as well as by the participants, which renders the servicing system to be even more flexible. Online administration is available so that administrators can change data in real-time. There is no volatile database and so the complexity of the imports and export of data between the servicing system and external systems are decreased.

The servicing system is able to handle more than one financial instrument, for example options, warrants, convertible bonds, share grants. Additionally, grants may be set up to include multiple vehicles. These different financial instruments are managed in the same data structure to ensure consistency in reporting and viewing. However, it is possible to make a difference between the different financial instruments for reporting and plan management. This is achieved by gathering all relevant information on the plans at a greater level of granularity and making the associations with this granularity to business rules which are templated in the servicing system and configurable by the corporation.

The servicing system provides online means for corporate use to administer their global benefit plans and logic to meet taxation and reporting requirements for these plans. These reporting means facilitate the reporting to regulators, internal corporate departments and plan participants.

Additionally, the servicing system provides for online information and trade requests by the participants of the benefit plans with straight through execution to exchanges and targeted communication functionality. It furthermore enables a multi-lingual access for participants to the plans. The execution can be handled through web, call center and/or a financial advisor network. The system enables a straight through processing of executions to any major stock exchange and enables the trading in multiple currencies.

An innovative processing logic takes ordinarily non-tradable vehicles and allows the realization of cash and securities. This is achieved through the definition of business processes that allows transaction instructions to be sent through to the trading and settlement platforms. The interfaces themselves are designed to allow complete inter-changeability between single or multiple execution, settlement and custody providers whilst retaining the automated processing that gives real time pricing and fulfillment on transactions. The interfaces allow for the provision of trading and settlement across multiple exchanges, brokers and transaction service providers.

The servicing system according to the invention can be used by corporations which have stock listings in more than one market, especially in more than one European market, and employees in multiple locations. The corporation can have multiple plan types requiring the processing of multiple asset types, wherein a single participant, i.e. an employee of the corporation, can participate in multiple plans. The company can offer in these plans shares, options and a multiple of alternative investment instruments and vehicles. It includes for example administration of employee stock option plan (ESOP), employee stock purchase plan (ESPP) and restricted stock awards (RSA) warrants, convertible bonds and share grants. The investment instruments and vehicles are for example trade instruments, such as shares and warrants as well as non tradable instruments, such as American style options, European style options, SARs and phantom shares.

Other preferred embodiments of the system are mentioned in the dependent claims.

### Brief description of the drawing

In the following, a preferred embodiment of the invention is explained with reference to the drawing. The drawing shows
- Figure 1: a general view of a web-application set-up including the inventive servicing system;
- Figure 2: a more detailed diagram of the servicing system embedded in the web application set up;
- Figure 3: a general view of the servicing system with its interfaces;
- Figure 4: a general view of the servicing system in a multi corporation application;
- Figure 5: a general view of an execution and settlement procedure using the inventive servicing system;
- Figure 6: a diagram showing the multiple single steps used in the execution and settlement procedure according to figure 5 and
- Figure 7: ing to figure 5 and a general view of the data flow form and to the inventive servicing system during the procedure according to figure 5.

### Detailed description of a preferred embodiment

### System Architecture

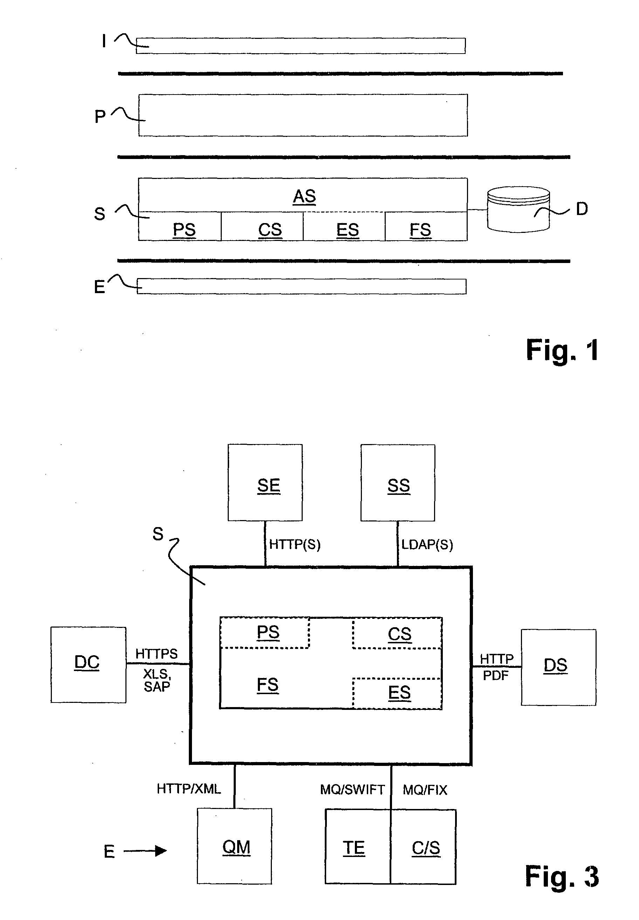

**Figure 1** shows a simplified web-application set-up including the inventive computer based servicing system S for servicing an employee equity-based compensation program of a corporation.

This servicing system S is connectable through an application server or manager AS by Proxy P, for example a safe reverse Proxy, with the Internet I. It is furthermore connectable to external systems E, like corporation databases and banking systems.

The servicing system S comprises at least one internal database D. The data used for the inventive system S are stored within this database D. For database D a known database can be used, like for example an Oracle database. The servicing system S furthermore comprises at least four main modules: a Framework Services Module FS, a Participant Services Module PS, a Corporate Services Module CS and an Execution Services Module ES.

The Framework Services Module FS wraps the other modules of the servicing system S. Some framework services are used by outside i.e. authentication services. In this case the framework services are at an upper level than the services of the other modules. Other framework services are used by the servicing system S itself, in which case they are located at a lower level or on the same level as the services of the other modules.

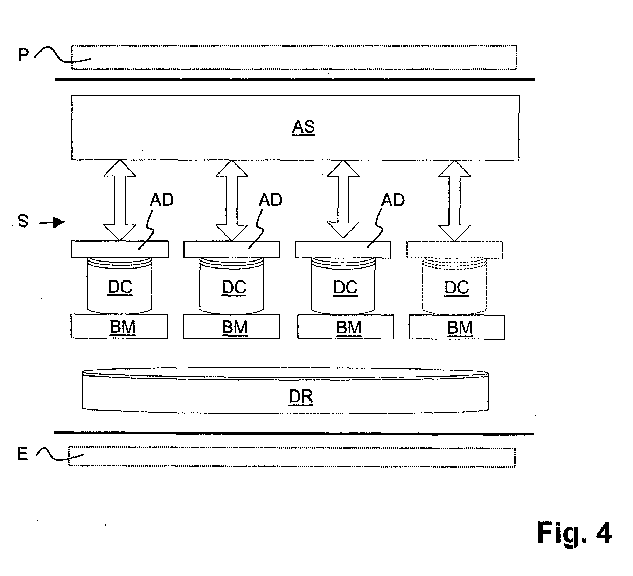

The servicing system S can be used for one corporation only. The servicing system S according to the invention can however also be used for multiple corporations, as is shown in figure 4.

In case of the servicing system S being used by a multiple of corporations, instead of one single database D, a database DC for each company is used as well as a central database DR. Each company is setup within its own company database DC, where all data related to the company are stored. Each company database DC contains the main business logic which is encapsulated within a PL/SQL stored procedure layer. All data used by the system S, for example reference data such as countries and currencies, are also stored in the central database DR, which incorporates central reference data as well as external interface data. A web-based system administration application will manage the central reference data interactively. Modifications to the central reference data will be propagated to each of the company databases DC.

Batch modules BM, shown in **figure 4**, will be used to manage company reference data non-interactively. Once the application server AS gets a request, a login proxy or router service identifies the user's company membership by reading the company identification stored by the Proxy P within a HTTP header. With the company identification in hand, the application server AS then determines which database DC connection to use. The corresponding connection parameters are stored within a configuration file. This separation of data is made for security reasons as well as for technical reasons, since the access to company-specific data is made easier.

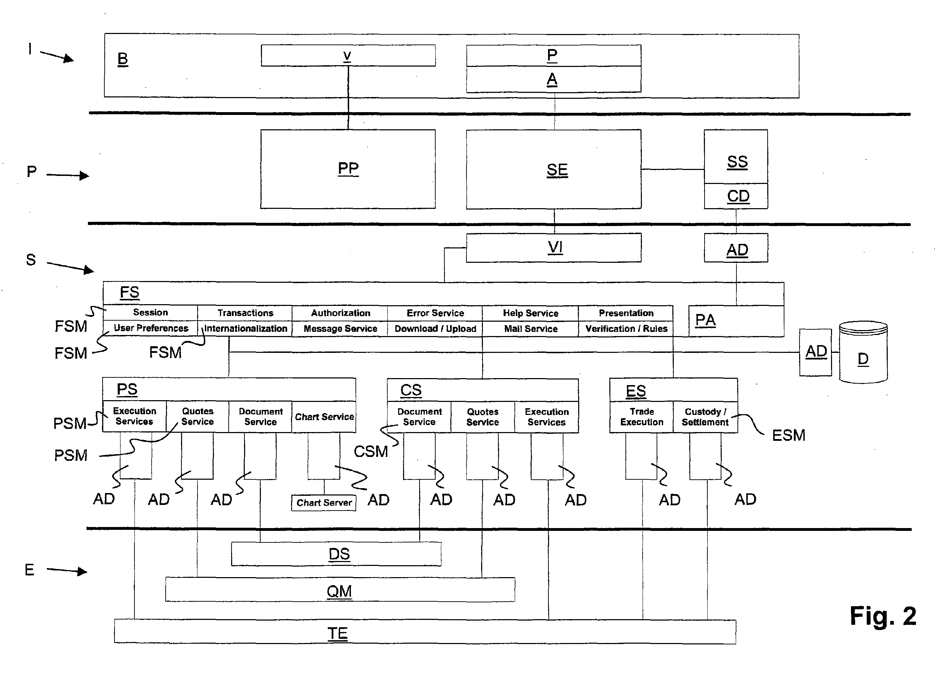

In the following, the system architecture is described in more details with reference to **figure 2**. The description is structured top-down, from the Internet I and browser-level B down to the external systems E.

On the browser level B, a visitor V can enter a public portal PP and contact the company providing the servicing system S. For a corporation or company being already client of the servicing system S, a company's administrator A can access the servicing system from the internet I using a secure entry module SE by entering his password. A participating employee P of the corporation can do the same. The secure entry module SE is responsible for the authentication, URL redirection and the session management across the system. The safe entry module SE also provides means for choosing the session within the system S, for changing the password and for help in case the participant P or the administrator A forgot his password. If the password is not known, the user P, A is routed to a safe server SS, enabling the change of password. The access is then routed by an adaptor AD, for example an LDAP adaptor, to a Credential Services Sub-module PA of the Framework Services Module FS. The safe server SS is furthermore the access point to a critical data storage CD, here a LPDA Server, and it is responsible to store the users information, for example the identification, the password and the company membership.

If the password is correct, the corporation is identified through a standard Login Proxy and Verification interface VI and the user, i.e. the participant or the corporation administrator, is routed to the part of the servicing system S belonging to this corporation. The participant P is also routed according to the granted benefit plans, the currency he is familiar with and the language he is speaking.

As was mentioned before, the servicing system S consists mainly of the Framework Services Module FS and three other modules, i.e. the Participant Services Module PS, the Corporate Services Module CS and the Execution Services Module ES.

The Framework Services Module FS includes a multiple Framework Services Sub-modules FSM as listed in figure 2, for example sub-module servicing session, user preferences, transactions, internationalization, authorization etc.

The servicing session sub-module FSM keeps track of any conversational data and verifies the session's lifecycle. In the user preferences sub-module FSM, the user's preferences are stored. The transactions sub-module FSM is responsible to perform ACID operations. The internationalization sub-module FSM takes care of local specific issues, so that the servicing system S can used in a multilingual/multi-currency market. The authorization sub-module FSM is based on roles and it checks the roles the user P, A belongs to. In a rules framework services sub-module FSM all corporation wide relevant rules are defined. Such rules are rules for importing and exporting files; rules for actions for participant status values and beneficiary actions; rules when approvals are required; residual cash management rules; rules about report properties; rules for event monitoring and notification; dividend rules; rules for overwriting of participant address/phone/email; rules for locking accounts; quotes requirements in real time or delayed and their implication on cost; rules for resetting passwords; authorization rules and functionality.

The Participant Services Module PS includes a multiple of Participant Services Sub-modules PSM as listed in figure 2, namely an execution services sub-module PSM, a quotes services sub-module PSM, a documents service sub-module PSM and a chart service sub-module PSM. The Participant Services Module PS allows the participant P to navigate within the appropriate areas of the application. Universal and multilingual navigation is possible. Furthermore, it comprises the following features:
- Login, password and security management
- Participant core data/personal detail management
- Agreement management
- Report and statement of participant positions in the invested instruments (multiple views and sorts)
- Personal page administration, including To Dos
- order entry, review and verification
- preferences
- Stock market quotes
- Support, Help and frequently asked questions (FAQs)
- modeling (x-vehicles)

The chart service sub-module PSM of the Participant Services Module PS is connected to a chart server, which enables presentation of diagrams of quotes. The chart server is preferably part of the inventive servicing system S. However, it can also be an external system.

The Corporate Services Module CS includes or is connected to the internal database, or in case of a multiple corporations, to the company databases DC. As mentioned before, these databases DC are exclusively adapted to the needs and rules of the corporations. In a Corporation Servicing Sub-module CSM of the Corporate Services Module CS, all corporation generic information such as identifier, WEB, logos etc. are stored. Furthermore, it includes information about the invested instruments, vehicles and underlying securities, trusts, payrolls, organization structures and security organization parameters. The different accounts, such as corporate cash and depot and payroll cash accounts are defined therein as well corporation related codes, for example the rank and the participant type. This sub-module CSM includes furthermore the tax information. Documentation services, Execution Services and Quotes are part of Participant Services PS as well as Corporate Services CS.

The Execution Services Module ES guarantees a full straight thorough processing. It includes an Execution Services Sub-module ESM for trade execution and an Execution Services Sub-module ESM for custody and settlement. These are separate modules, which can be called by the Participant Services PS as well as by the Corporate Services CS, the Participant Services PS for order placing and review and the Corporate Services CS for setup and reporting.

The above mentioned external systems E are for example a document storage DS, a Quotes Market Data Service System QM and a Trade Execution System TE, as shown in figure 2. The document storage DS is used to keep for example pdf's, statements and other communications sent by the bank, either directly or upon company request to the participant P. The document storage DS can also be an internal part of the servicing system S itself. The Quotes Market Data Service System QM is a platform to obtain market information, for example the prices of the equities. Normally, it is used as a read-only system from the servicing system S. The Quotes Market Data Service System QM is not responsible to store any data of the servicing system S. The External Trade Execution System TE is used for trading.

In accordance with the invention, the servicing system S is connected through standard messaging interfaces to all external systems as well as to all internal databases D, DR, DC and servers. As can be seen in figure 2, each module of the system S has its own adaptor AD for using standard messaging interfaces to their corresponding module of the external systems. The database D or the central database DR and the companies databases DC are for example connected with the Servicing Modules by a PL/SQL adaptor AD. As interface to a Chart Server, a jClass API adaptor AD is used. The Quotes Market Data Service System QM is connected by MADIS adapters AD, the document storage DS by DocStore adapters AD. The Trade Execution System TE is connected by execution services adapters AD like a FIX adapter, a SWIFT messaging adapter and a Cash Message adapter.

In **figure 3**, the servicing system S, its interfaces and the external systems E are shown in a different representation, wherein the same modules are designated with the same reference numbers as in the other figures. This representation shows the standard protocols and interactions used for communication with the external systems and databases. The protocols and interactions depend on the category of these external systems and databases. In this embodiment, HTTP/XML, HTTPS, XLS, SAP, MQ/SWIFT, MQ/Fix, PDF and LDPAP(S) are used.

### Customizable Administration

The servicing system S according to the invention is highly customizable by the corporations. This is achieved by using an open architecture for the servicing system S and especially by using customizable data tables and templates.

Once these mentioned tables and templates are created, the servicing system S provides the company with the ability to further customize the service but does not allow for conflicting requirements based on logic within the system. This flexible handling is linked to a set of validation rules and core functionality to prevent the corporation or the service providing company to build illogical or conflicting set- ups. The servicing system S also considers global legal and tax requirements. This is achieved through overlaying company, plan, grant, vest logic, and eligibilities as base level parameters with employee lifecycle events, country specific requirements, exchange specific rules, regulatory and tax information on top. Any items that conflict each other are kicked out and managed. Access and authorization is based on a similar principle. User roles are defined on a function by function level as well as data level entitlement by a column and row based access.

The company is in a position to customize the company's as well as the central reference data. The customization of the company's data can easily be done by changing the data in the corporation database DC. The company database DC has also parameters that dictate how execution can happen. These parameters are for example customizable by country, exchange and plan as well as by vehicle and currencies.

If a company wishes to change any central reference data, a local reference data table entry is created. This local reference data table is preferably stored in the corporation database DC. An attribute (Modify_Type) indicates the type of customizing undertaken: a new entry, modification of an existing entry or a "deletion" of an existing entry. Below, an example of the three types of modifications are given. In this example, a country table shall be customized:
1. If the company wishes to add a dummy country, then this country is inserted into a local country table of that company and the attribute Modify_Type for this entry contains the value "new".
   All the programs that access the country table treat this new dummy country as though it is present in the central reference data.
2. If a company wishes to modify an attribute of a reference data entry, a new row is inserted in the local reference data table with the same key as that in the central reference data table and the attribute Modify_Type for this entry contains the value "mod".
   All the programs which access the reference data will fetch the row from this table and not from the central reference data table. This entry in the local table will not get updated when the central reference data are changed.
3. If a company wishes to remove a country from the country table, a new row is inserted and the attribute Modify_Type for this entry contains the value "del".
   All the programs which access the reference data will not fetch the entry corresponding to this country from the central reference data table. This entry in the local table will not get updated when the central reference data are changed.

The inventive servicing system S is furthermore able to manage more than one financial instrument in the same data structure. By generalizing naming conventions and taking the maximum set of parameters across financial instruments that are used for compensation, the servicing system is able to manage a transaction on a variety of instruments. This is achieved by gathering all relevant information on the plans at a higher level of granularity and making the associations with this granularity to business rules that are templated in the servicing system and configurable by the corporations.

For example, the corporation can have many plans and each plan can have many vehicles, for example a stock option and a stock purchase share. Grants or participations are set up to accommodate this level of flexibility. Additionally, the system allows for the recording and processing of mobile populations by keeping track of the taxable events, location of participants at points in the plan, participation, grant and employee lifecycles. This information is reportable to the corporation and to the participant so that they can comply with local tax rules and regulatory requirements.

Another example of this customizable structure is the ability to set up a variety of distribution methods within one company and even within a plan. Business procedures are divided into multiple logical single steps that reflect the processing of trades, cash and stock settlements. Transaction instructions can be customized to give specific instructions to the broker for the handling of trades. For example trades can be instructed for automatic execution without manual interference of a trader. For example, the company can choose to have trades processed through a straight through processing with orders being sent one by one to the exchange, and for other plans/grants to be processed via daily batch trading based on the days trade requests of based on elections made by the participant over a period of time. This functionality can be used by any company, plan, grant in the servicing system S and is changeable post implementation.

### Trade links for straight through execution

As was mentioned before, the inventive servicing system S has interfaces that are portable to any financial services provider. This gives the inventive system S the ability to execute on any exchange, through the broker's membership, and to settle with any provider be it the same entity as the execution provider or otherwise.

The use of a standard protocol like FIX and SWIFT for the external trade execution enables straight through execution services (STP) for trade execution, custody and settlement.

The business process itself is broken down into a multiple single steps consisting of logical standard banking transactions. This ensures maximum efficiency and portability to any provider both on the execution and settlement sides, as is explained in the following.

Modelling is based on indicative market conditions that gives the plan participant as accurate a likely outcome as possible.

Order capture is simplified such that for example once a participant has elected to Exercise, Exersell, or Sell to Cover their options positions, a series of transaction processes are initiated automatically.

If a market order is generated and delivered through the FIX interface to the broker, the fulfillment by the broker is captured in real time and displayed to the participant so that he has a continual commentary on the status of the execution. When it is completed, the previously unknown value, i.e. the quantity and the price, becomes known.

If an option shall be exercised, the inventive system S calculates the required Exercise quantities based on the market execution and allocates these to the lowest level within the participant's portfolio. In this case a standard message is delivered to a registrar or a custody provider to deliver the stock against the corporate's treasury account.

Cash journals are updated by generating journal instructions to distribute the execution proceeds across the corporate's treasury, the corporate's payroll accounts, and the fee accounts.

Stock delivery instructions are delivered to the custodian to distribute the residual securities to the plan participant.

Cash payment instructions are delivered to the custodian to distribute the residual cash to the plan participant.

The books and records at the custodian record the receipt and delivery of cash and securities that mirrors the activity on the inventive system S.

The inventive system S itself comprises books and records which record the option position in relation to the transaction activity at the lowest possible level as well as the movement of cash and securities at the custodian.

Reconciliation reports are generated by the custodian in the form of SWIFT messages which are delivered through the before mentioned SWIFT messaging adaptor AD. Reconciliation reports are generated by the servicing system S in terms of the expected movements at the custodian based on the trade instruction. The reports are run through a reconciliation engine with exceptions being managed by the business's operations unit.

The fulfillment on execution prior to the generation of the settlement instructions allows the servicing system S to process settlement requirements that exactly match the movements at the custodian.

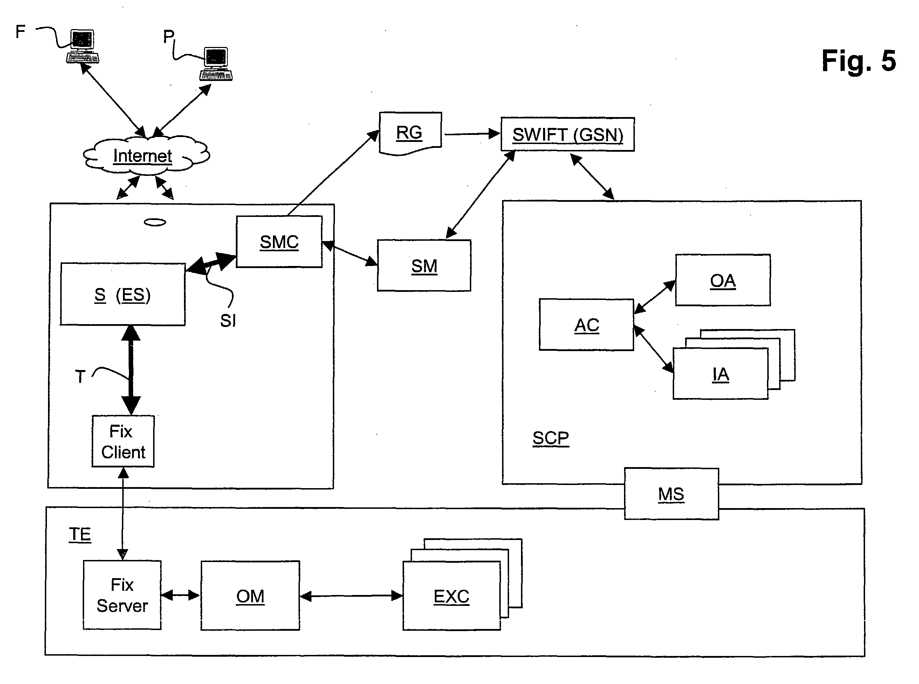

In **figure 5**, an automatic execution and settlement procedure using the Execution Services Module ES of the servicing system S is shown. If an order T is generated in the servicing system S by the participant P, a FIX instruction including an account number of a FIX client is sent to the external trading system TE of a bank. The account number can represent an individual account or an omnibus bulked account. Since industry standard messaging interfaces are used, the participant P and/or the corporation F is allowed to define the handling rules and routing instructions for orders on an individual basis.

The external trading system TE feeds via a FIX Server an order management system OM. This order management system OM sends the order to an exchange EXC chosen for execution and receives back details of the fills as they happen. The order management system OM delivers the fill information to the servicing system S via the FIX interface. At the completion of the execution, the servicing system S sends the trade details SI through a SWIFT messaging client SMC to the registrar RG, which sends the information through SWIFT(GSN) to the settlement and custody provider SCP. In this example, the settlement and custody provider SCP comprises fee accounts A, omnibus accounts OA and individual accounts IA. When the settlement and custody provider SCP has performed the trade enrichment, the adapted information is sent back through SWIFT(GSN) and a SWIFT messaging system SM to the servicing system S. The market settlement MS is made directly from the settlement and custody provider SCP with the external trading system TE.

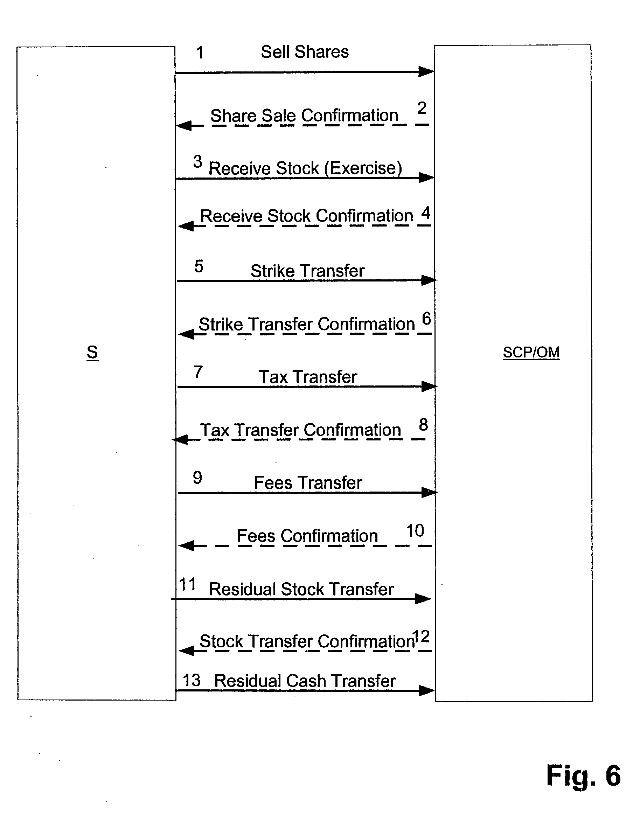

In **figure 6**, the above mentioned automatic execution and settlement process is shown in a different way, explaining now the different steps taken. The settlement and custody provider SCP and the trade execution are in this figure incorporated in the same symbol called SCP/OM:
Execution instructions 1 are sent from the servicing system S through the FIX interface to the order management OM, namely a broker. An execution advice 2 is sent back from the broker through the FIX interface to the servicing system S. The exercise instruction 3 against the corporation F is sent from the servicing system S directly to the registrar RG. Usually, these requests will be limited in time per corporate client in order to limit processing requirements and external communications. For example it can be limited to once daily. From the book-keeping system of the settlement and custody provider SCP, a stock receipt advice 4 will be sent to the servicing system S, which will also include the servicing system S internal transaction and participant reference. In the fifth step, an instruction 5 to debit the participant account and credit the corporate strike account will be sent, the instruction will once again include the transaction and participant reference. A confirmation 6 of the journal instruction execution including the transaction and participant reference will be returned to the system. Now, the instruction 7 to debit the participant account and credit the corporate payroll account will follow. The confirmation 8 of journal instruction execution including tax transfer is sent, which is followed by the confirmation 10 of journal execution including fees transfer. Now an instruction 11 to deliver cash to a re-investment account, which can be a third party bank account or an internal bank account of the bank providing the servicing system, is delivered. Last but not least, a confirmation 12 concerning the cash transfer is sent to the servicing system and a residual cash transfer 13 is conducted. All the above mentioned confirmations and instructions 3-13 always include the servicing system transaction and participant reference number. Other transactions are handled in a similar way, wherein the different instructions and confirmations are proceeded step by step in order to enable a fully automatic handling and trading.

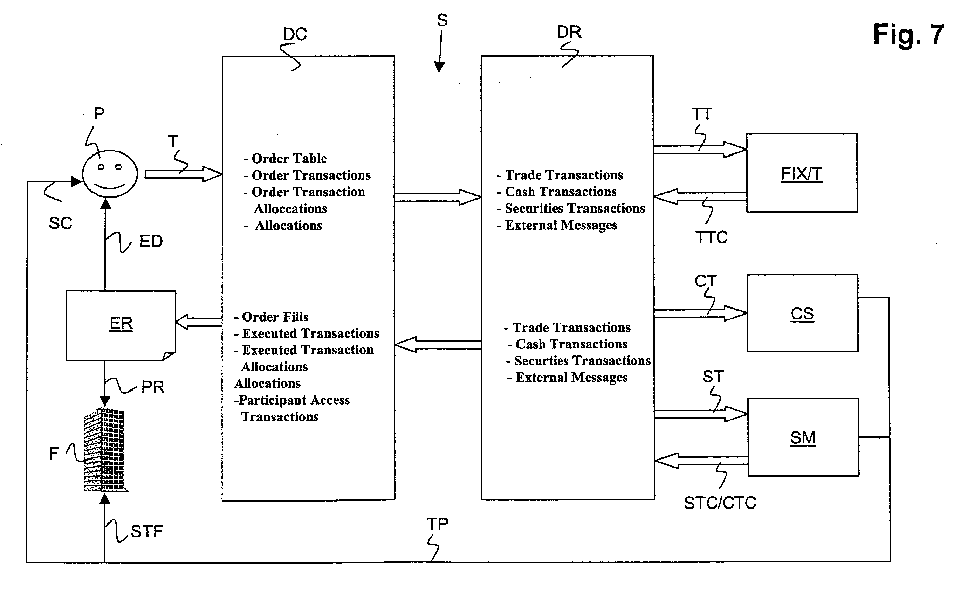

In **figure 7**, it is shown, how the corporate and the central database DC, DR are used during such a transaction. T is once again the order entered by the participant P into the servicing system S. The servicing system S is here only represented by the corporate database DC and the central database DR. FIX/T is the external trading module, TT is a trade transaction, TTC a trade transaction confirmation. CST is the external cash settlement system, CT means the cash transaction and TP the transactions proceedings. SM is the SWIFT messaging adaptor used, ST means the securities transactions and STC/CTC the securities transactions confirmations and the cash transactions confirmations. STF are the strike, taxes and fees and ER the execution report sent from the servicing system S to the company F, for example in a payroll report PR. SC means the information sent to the participant P concerning cash, shares etc.

The servicing system S according to the invention is very flexible, highly customizable and can meet the requirement of international companies, especially European companies.

### List of reference numbers

- I: Internet
- CD: Critical Data Storage
- P: Proxy
- PP: Public Portal
- SE: Secure Entry Module
- SS: Safe Server

- V: Visitor
- P: Participant
- A: Company's Administrator
- F: Company

- S: Servicing System
- AS: Application Server
- VI: Verification Interface
- FS: Framework Services Module
- FSM: Framework Services Sub-module
- PA: Credential Services Sub-module
- PS: Participant Services Module
- PSM: Participant Services Sub-module
- CS: Corporate Services Module
- CSM: Corporate Services Sub-module
- ES: Execution Services Module
- ESM: Execution Services Sub-module
- BM: Batch Modules
- AD: Adaptor
- PA: Credential Services Sub-module

- D: Database
- DC: Corporate Database
- DR: Central Database
- E: External Systems
- DS: Document Storage
- QM: Quotes Market Data Service System
- TE: External Trade Execution System
- T: Trade Order
- OM: Order Management System
- EXC: Exchange
- SMC: SWIFT messaging client
- SM: SWIFT messaging
- RG: Registrar
- SCP: Settlement and Custody Provider
- AC: Account
- OA: Omnibus Account
- IA: Individual Account
- MS: Market Settlement
- TT: Trade Transaction
- FIX/T: external trading module
- TTC: Trade Transaction Confirmation
- CST: External Cash Settlement Module
- CT: Cash Transaction
- TP: Transaction Proceedings
- ST: Securities Transactions
- STC/CTC: Securities Transactions Confirmations
- STF: Strike Taxes and Fees
- ER: Execution Report
- PR: Payroll Report
- SC: Information

## Claims

1. A computer based servicing system (S) for servicing at least one equity-based employee benefit program, the system (S) comprising a framework services module (FS), a participant services module (PS), a corporate services module (CS) and an execution services module (ES), wherein at least one of the modules (FS, PS, CS, ES) communicates with at least one database (D, DC, DR) and wherein the system (S) has standard messaging adaptors (AD) for communication with external systems (I, E), at least one of said external systems (I, E) being a trade execution system (TE).

2. The servicing system according to claim 1, wherein all of said adaptors (AD) are standard messaging adaptors.

3. The servicing system according to one of claims 1 or 2, wherein said system (S) has a multiple of standard messaging adaptors (AD), each adaptor (AD) being of a kind dependant on the type of the external system (I, E) a communication has to be established with.

4. The servicing system according to one of claims 1 to 3, wherein said adaptors (AD) are using HTTP/XML, HTTPS, XLS, SAP, MQ/SWIFT, MQ/FIX, PDF or LDPAD(S) protocols.

5. The servicing system according to one of claims 1 to 4, wherein at least one of said at least one database (D, DC, DR) is an internal database of said servicing system (S).

6. The servicing system according to one of claims 1 to 5, wherein said a least one database is at least one corporate database (DC) and at least one central database (DR), wherein in the corporate database (DC) all data related to a company are stored and in the central database (DR) central reference data and external interface data are stored.

7. The servicing system according to one of claims 1 to 6, wherein said servicing system (S) has an open architecture.

8. The servicing system according to one of claims 1 to 7, wherein said at least one database (D, DC) comprises customisable tables and templates.

9. The servicing system according to claims 6 and 8, wherein the customisable tables and templates are stored in the at least one corporate database (DC).

10. The servicing system according to one of claims 6 to 9, wherein the system (S) treats changes in the corporate database (DC) as being existent in the central database (DR) .

11. The servicing system according to one of claims 1 to 10, wherein the system contains means to gather relevant information on plans of the at least one benefit program at a greater granularity of the system and means for making associations with this granularity to business rules, the business rules being templated in one of the services modules (FS, CS, ES, PS), preferably in the framework services module (FS).

12. The servicing system according to one of claim 1 to 11, wherein the system (S), preferably the execution services module (ES) comprises means with standardised steps for execution and settlement of a trade and wherein said system (S), preferably said execution services module (ES) communicates with the external trade execution system (TE) and any other external system (SCP) necessary to execute and settle a trade only through these standardised steps.

13. The servicing system according to 12, wherein the standardised steps correspond to existing banking processes.

14. The servicing system according to one of claim 1 to 13, wherein the system (S) comprises means to process the execution and settlement as well as tax calculation and reporting automatically.
